# EUROPEAN PATENT SPECIFICATION

(11) **EP 2 392 552 B1**
(45) Date of publication and mention of the grant of the patent: **22.03.2017**
(21) Application number: 09839286.3
(22) Date of filing: 26.12.2009
(51) Int. Cl.: C04B 35/195, H01L 21/683, C04B 35/645

(54) **CORDIERITE-BASED SINTERED BODY**
SINTERKÖRPER AUF BASIS VON CORDIERIT
CORPS FRITTÉ À BASE DE CORDIÉRITE

(30) Priority: 28.01.2009 JP 2009016527
(43) Date of publication of application: 07.12.2011
(73) Proprietor: Kyocera Corporation, Kyoto-shi Kyoto 612-8501 (JP)
(72) Inventor: SENO,Hiroaki, Kirishima-shi Kagoshima 899-4312 (JP)
(74) Representative: Viering, Jentschura & Partner mbB Patent- und Rechtsanwälte
(86) International application number: PCT/JP2009/071701
(87) International publication number: WO 2010/087099

(56) References cited:
- WO-A1-00/30995
- JP-A- 2 503 190
- JP-A- 11 255 557
- JP-A- 61 168 563
- JP-A- 2001 151 563
- JP-A- 2002 173 366
- JP-A- 2004 203 724
- JP-A- 2004 256 347
- JOHNSON R ET AL: "Solid state reactions of cordierite precursor oxides and effect of CaO doping on the thermal expansion behaviour of cordierite honeycomb structures", JOURNAL OF MATERIALS SCIENCE, SPRINGER NETHERLANDS, NL, vol. 38, no. 13, 1 July 2003 (2003-07-01), pages 2953-2961, XP002409519, ISSN: 0022-2461, DOI: 10.1023/A:1024421527054
- NAKAHARA M ET AL: "Effect of particle size of powders ground by ball milling on densification of cordierite ceramics", JOURNAL OF THE CERAMIC SOCIETY OF JAPAN, NIPPON SERAMIKKUSU KYOKAI, JP, vol. 107, no. 4, 1 April 1999 (1999-04-01) , pages 308-312, XP008088192, ISSN: 0914-5400

## Description

### Technical Field

The present invention relates to a cordierite-based sintered body, and particularly to a cordierite-based sintered body suitable for an electrostatic chuck, and for a stage of a lithography machine and a jig used in a semiconductor manufacturing process.

### Background Art

A cordierite-based sintered body has been known as low thermal expansion ceramics, and has been applied in filters, honeycombs, refractory objects and members of semiconductor manufacturing devices.

In semiconductor manufacturing devices, with the circuits becoming highly integrated as in the case of LSI (large scale integration) circuits and the like, the geometries of circuits are rapidly getting finer and their trace widths are refined to the level of submicron precision. In particular, high precision is demanded of a lithography machine for building high precision circuits in a Si wafer. For example, in a stage of a lithography machine, a positioning precision of less than or equal to 100 nm (0.1 µm) is required, and, as it now stands, errors in positioning of lithographic exposure is greatly affecting the improvement in product quality and yield.

Ceramics such as alumina and silicon nitride which have been commonly used in semiconductor manufacturing devices have low thermal expansion coefficients compared to metals, but their thermal expansion coefficients in the range of 10 to 40°C are 5.2 × 10⁻⁶/°C and 1.5 × 10⁻⁶/°C respectively, which means that several hundreds of nanometers (0.1 µm) of deformation will generate with every 0.1°C change in ambient temperature. In precision processes such as lithographic exposure, this change poses a big problem, that is, conventionally used ceramics such as alumina and silicon nitride exhibit low precision features, resulting in low productivity.

In contrast, a cordierite-based sintered body has a smaller thermal expansion coefficient than alumina and silicon nitride, and the aforementioned problem in lithographic exposure precision can be solved to a certain extent.

However, in the case of a stage of a lithography machine in which a support such as a stage carrying a Si wafer moves with high speed to a position where lithographic exposure treatment is conducted, the support itself after the movement continues to vibrate even after it comes to a halt at a predetermined position. Thus, a problem of impaired lithographic exposure precision is posed when lithographic exposure treatment is conducted under the vibrating state. The problem is more conspicuous as the trace width formed by lithographic exposure is made smaller, and it constitutes a fatal problem in forming highly fine trace circuits. The vibration is caused by low stiffness of members used in the machine and thus, high stiffness, in other words high Young's modulus, is demanded of such members.

A cordierite-based sintered body having high sinterability without impairing its low thermal expansion feature, and having improved Young's modulus has been conventionally known. A cordierite-based sintered body is prepared by compounding cordierite with a rare earth element oxide at a prescribed ratio and having the rare earth element oxide present in a specific crystal phase in the grain boundary of cordierite crystals (See Patent Document 1).

NAKAHARA M ET AL: "Effect of particle size of powders ground by ball milling on densification of cordierite ceramics", JOURNAL OF THE CERAMIC SOCIETY OF JAPAN, NIPPON SERAMIKKUSU KYOKAI, JP, vol. 107, no. 4, 1 April 1999 (1999-04-01), pages 308-312 discloses a dense cordierite ceramic with low thermal expansion coefficient.

### Prior Art Documents

### Patent Documents

Patent Document 1: Japanese Unexamined Patent Publication No. 11-130520

### Summary of the Invention

### Problem to be Solved by the Invention

In order to inhibit the vibration of a support after the support moves and comes to a halt at a predetermined position and to improve the lithographic exposure precision of a lithography machine, it is necessary not only to improve its low thermal expansion feature and stiffness, but also to reduce the weight of the material itself. In other words, a member having a small specific stiffness, i.e., the ratio of stiffness of the member to its specific gravity (stiffness/specific gravity), has a large inertia force in high speed motion even if its stiffness is high, so the support after coming to a halt at a predetermined position is prone to generate a vibration.

In a cordierite-based sintered body described in Patent Document 1, stiffness is enhanced by compounding cordierite with a rare earth element oxide at a prescribed ratio. However, a rare earth element has a large atomic weight, so a sintered body will have a large specific gravity and a small specific stiffness, which still raises the problem of a support being prone to vibrate after coming to a halt at a predetermined position.

An object of the present invention is to provide a cordierite-based sintered body having high specific stiffness.

### Means for Solving the Problem

The present invention provides a cordierite-based sintered body according to claim 1. Another advantageous embodiment of the present invention is described in dependent claim 2.

A cordierite-based sintered body of the present invention contains cordierite as a primary crystal and alumina as a secondary crystal,
wherein the cordierite-based sintered body has a porosity of 0.25% or less and has a thermal expansion coefficient at room temperature of -0.1×10⁻⁶/°C or more and 0.1×10⁻⁶/°C or less,
wherein Ca is contained at an amount of 0.2 to 0.8% by mass of the total mass in terms of CaO; the ratio (I_{Al}/Iₘₐₛ) of the peak intensity I_{Al} of the main peak of alumina (2θ = 35.0 - 35.5°) to the peak intensity Iₘₐₛ of the main peak of cordierite (2θ = 28.0 - 29.0°) each measured with an X-ray diffraction device using a Kα-ray of Cu falls within the range of 0.02 to 0.15; and a glass phase is not contained.

A cordierite-based sintered body of the present invention contains cordierite having a negative thermal expansion coefficient and alumina having a positive thermal expansion coefficient in quantities fulfilling the peak intensity ratio (I_{Al}/Iₘₐₛ) of 0.02 to 0.15. Besides, the cordierite-based sintered body does not have a glass phase. Thus, increase in thermal expansion coefficient caused by the
presence of a glass phase can be suppressed. Therefore, the thermal expansion coefficient at near room temperature can be controlled to close to around zero.

Moreover, a cordierite-based sintered body of the present invention contains alumina in an amount fulfilling the peak intensity ratio (I_{Al}/Iₘₐₛ) of 0.02 to 0.15 and lightweight Ca in an amount of 0.2 to 0.8% by mass of the total mass in terms of CaO. This results in the improvements in the sinterability and the Young's modulus, and then the stiffness of a cordierite-based sintered body, which brings about high specific stiffness. Accordingly, for example, when a cordierite-based sintered body of the present invention is applied in a stage of a lithography machine used in a semiconductor manufacturing process, vibration of the stage after coming to a halt at a predetermined position can be suppressed and the lithographic exposure precision of the lithography machine can be improved.

Including a small amount of Ca has an effect of improving sinterability and enhancing the stiffness of cordierite, but excessive amount of Ca addition will reduce the stiffness. Meanwhile, merely including a small amount of Ca does not reduce the thermal expansion coefficient to near zero. For this reason, by including a given amount of Al₂O₃, the stiffness can be enhanced and concurrently the thermal expansion coefficient can be brought to almost zero. While it is difficult to obtain a sufficiently dense cordierite-based sintered body with only a small amount of CaO, inclusion of alumina in an amount so that the peak intensity ratio (I_{Al}/Iₘₐₛ) falls in the range of 0.02 to 0.15 will inhibit abnormal grain growth, and thus a dense cordierite-based sintered body will be obtained.

In other words, it has been conventionally practiced to include a given amount of substances such as spinel and silicon carbide with a view to controlling the thermal expansion coefficient to almost zero and enhancing the Young's modulus. However, including substances such as spinel and silicon carbide extremely reduces the sinterability of cordierite. On the other hand, in the present invention, alumina is included so that the ratio (I_{Al}/Iₘₐₛ) of the peak intensity I_{Al} of the main peak of alumina (2θ = 35.0 - 35.5°) to the peak intensity Iₘₐₛ of the main peak of cordierite (2θ = 28.0 - 29.0°) each measured with an X-ray diffraction device using a Kα-ray of Cu falls within the range of 0.02 to 0.15, thus the thermal expansion coefficient can be controlled to close to zero and concurrently the Young's modulus can be enhanced without reducing the sinterability.

In the present invention, by means of including Ca in an amount of 0. 2 to 0.8% by mass of the total mass measured in terms of CaO, the Young's modulus can be enhanced and the stiffness of a cordierite-based sintered body can be improved. The inventors of the present invention thinks that this is because the inclusion of Ca prompts grain growth of cordierite, improves the sinterability and then improves the Young's modulus.

Patent Document 1 discloses that the sinterability can be improved by using a rare earth element. However, a rare earth element has a large atomic weight, so porcelain becomes heavy. In the present invention, Ca, which is an element of low atomic weight and which does not impair the low thermal expansion feature of cordierite, is used, thus rendering a cordierite-based sintered body lightweight and highly stiff, and the specific stiffness can be improved.

A cordierite-based sintered body of the present invention is characterized in substantially composing of Mg, Al, Si, Ca and O. The cordierite-based sintered body can achieve thermal expansion coefficient of almost zero with the least amount of materials, and, at the same time, a lightweight and highly stiff cordierite-based sintered body can be obtained.

### Effects of the Invention

In a cordierite-based sintered body of the present invention, the thermal expansion coefficient at near room temperature can be controlled to almost zero, and at the same time, specific stiffness (= Young's modulus/specific gravity) can be enhanced. As a result, the cordierite-based sintered body may be applied, for example, as a member for a lithography machine for semiconductor manufacturing, for example, a stage carrying a semiconductor wafer, which conducts lithographic exposure treatment on a wafer to form highly fine circuits. Excellent precision with little dimensional change caused by ambient temperature change can be achieved, and reduction of precision posed by vibration can be prevented. Both the quality and mass productivity of semiconductor devices can be enhanced.

### Brief Description of the Drawings

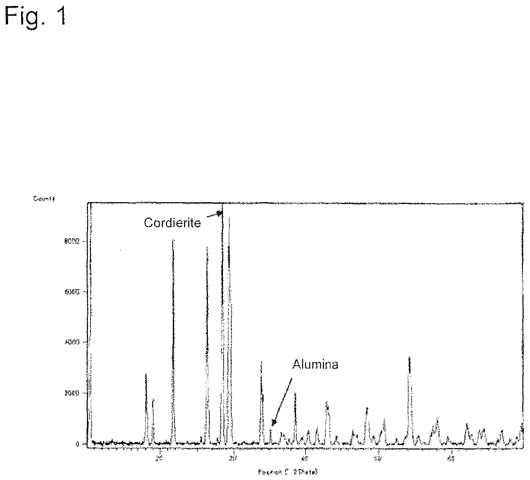

Fig. 1 is a chart showing the results of X-ray diffraction measurements of a cordierite-based sintered body of the present invention.

### Embodiments for Carrying Out the Invention

A cordierite-based sintered body of the present invention contains cordierite as a primary crystal, in other words, it contains a composite oxide having a general formula of 2MgO-2Al₂O₃-5SiO₂ as a primary crystal, and cordierite exists in the form of crystal particles having an average particle size of 1 to 10 µm.

A cardierite-based sintered body of the present invention contains alumina as a secondary crystal, wherein the peak intensity ratio (I_{Al}/Iₘₐₛ), i.e., the ratio of the peak intensity I_{Al} of the main peak of alumina (2θ = 35. 0 - 35. 5°) to the peak intensity Iₘₐₛ of the main peak of cordierite (2θ - 28.0 - 29.0°) each measured with an X-ray diffraction device using a Kα-ray of Cu, falls within the range of 0.02 to 0.15, and wherein a cordierite-based sintered body does not have a glass phase. Fig. 1 shows the results of X-ray diffraction measurements of a cordierite-based sintered body of the present invention.

A cordierite-based sintered body of the present invention contains cordierite having a negative thermal expansion coefficient (approximately -0.19 × 10⁻⁶/°C) and alumina having a positive thermal expansion coefficient(approximately 5.2 × 10⁻⁶/°C) in quantities fulfilling the peak intensity ratio (I_{Al/}Iₘₐₛ) of 0.02 to 0.15. Besides, a cordierite-based sintered body does not have a glass phase, thus increase in thermal expansion coefficient caused by the presence of the glass phase can be suppressed. Therefore, the thermal expansion coefficient at near room temperature can be controlled to close to around zero (-0.1 × 10⁻⁶/°C to 0.1 × 10⁻⁶/°C).

The crystal made of cordierite does not need to have a fixed ratio composition, for example, Al may be dissolved in excess or Ca may be dissolved. The added alumina partially reacts with cordierite crystals in the sintering process, and may be dissolved in cordierite or may precipitate crystals of aluminum silicate or spinel. However, because the peak intensity ratio (I_{Al}/Iₘₐₛ) fulfills the value of 0.02 to 0.15 and a glass phase is not allowed to exist, the thermal expansion coefficient at near room temperature can be controlled to close to around zero.

Alumina exists mostly in the form of particles in the grain boundary of the primary crystal particles made of cordierite, and the average crystal particle size is 0.1 to 10 µm, preferably 0.2 to 3 µm.

The reason why the peak intensity ratio (I_{Al}/Iₘₐₛ) is set to be in the range of 0.02 to 0.15 is that, when (I_{Al}/Iₘₐₛ) is less than 0.02, the Young's modulus cannot be improved and the thermal expansion coefficient cannot be reduced to almost zero, and when (I_{Al}/Iₘₐₛ) is more than 0.15, the Young's modulus can be improved but the thermal expansion coefficient cannot be reduced to almost zero.

The peak intensity ratio (I_{Al}/Iₘₐₛ) is preferably in the range of 0.05 to 0.10 from the viewpoint of improving the Young's modulus and controlling the thermal expansion coefficient to near room temperature at close to around zero.

A cordierite-based sintered body having no glass phase indicates a case where no broad peak (halo pattern) is detected in the low angle side when a cordierite-based sintered body is measured with an X-ray diffraction device using a Kα-ray of Cu. However, in observing the composition using a TEM (transmission electron microscope), an amorphous composite oxide containing Ca, Al, Si and O may be detected.

Moreover, a cordierite-based sintered body of the present invention is characterized in containing Ca as an element in an amount of 0.2 to 0.8% by mass of the total mass in terms of CaO. Thus, by including Ca in an amount of 0.2 to 0.8% by mass of the total mass measured in terms of CaO, and, as mentioned above, by including alumina in quantities fulfilling the peak intensity ratio (I_{Al}/Iₘₐₛ) of 0.02 to 0.15, the sinterability can be improved and the Young's modulus can be improved, the stiffness of a cordierite-based sintered body can be improved and the specific stiffness can be enhanced. When a cordierite-based sintered body of the present invention is applied, for example, in a stage of a lithography machine, vibration of the stage after coming to a halt at a predetermined position can be suppressed and the lithographic exposure precision of the lithography machine can be improved.

Specifically, by including Ca in an amount of 0.2 to 0.8% by mass of the total mass measured in terms of CaO, the Young' s modulus can be improved, and the stiffness of a cordierite-based sintered body can be improved. The inventors of the present invention think that this is because the inclusion of Ca prompts grain growth of cordierite, improves the sinterability and then improves the Young's modulus.

Because, when the amount of Ca inclusion is less than 0.2% by mass of the total mass in terms of CaO, the sintered body will not be sufficiently dense, and the Young's modulus will be reduced. When the amount of Ca inclusion is more than 0.8% by mass of the total mass in terms of CaO, a Ca compound (for example, anorthite) will be formed in large quantity in the grain boundary, and the Young's modulus will be reduced and concurrently the specific gravity and the thermal expansion coefficient will increase. In order to sufficiently densify the sintered body and improve the Young's modulus, Ca is preferably included in an amount of 0.4 to 0.6% by mass of the total mass measured in terms of CaO.

In conventional Patent Document 1, a rare earth (RE) element is included, but a rare earth element generally has a high atomic weight, so porcelain becomes heavy. In the present invention, Ca, which is an element of low atomic weight and which does not impair the low thermal expansion feature of cordierite, is used, thus rendering a cordierite-based sintered body lightweight and highly stiff.

It has been conventionally practiced to add spinel, silicon carbide or others. Because materials themselves of these substances have high Young's modulus, it is possible to improve the Young' s modulus of a cordierite-based sintered body by adding such a substance. However, the addition of the substance will extremely reduce the sinterability of cordierite, and consequently reduce its Young's modulus. Meanwhile, alumina partially reacts with cordierite crystals in the sintering process, and may be dissolved in cordierite or may precipitate crystals of aluminum silicate or spinel, thus can improve the Young's modulus while keeping the sinterability high. For this reason, (I_{Al}/Iₘₐₛ) for alumina crystals is controlled in the range of 0.02 to 0.15 in the X-ray diffraction measurements.

A cordierite-based sintered body of the present invention preferably is substantially composed of Mg, Al, Si, Ca and O. Thus, the thermal expansion coefficient of almost zero can be achieved by using minimum kinds of materials, and concurrently a lightweight and highly stiff cordierite-based sintered body can be obtained. Substantially composing of Mg, Al, Si, Ca and O herein means elements other than Mg, Al, Si, Ca and O are not positively added, but each of C, Ti, Zr, Li and Na may be included as impurities in an amount of 0.2% or less by mass of the total mass measured in terms of an oxide.

In a cordierite-based sintered body of the present invention, a composite oxide including Ca, Al and Si preferably does not exist substantially in the grain boundary of cordierite. A composite oxide including Ca, Al and Si, for example anorthite, is likely to be formed when the amount of Ca in ceramics is large. However, in the present invention, the amount of Ca is 0.8% or less by mass of the total mass, so a composite oxide including Ca, Al and Si does not exist substantially. The inventors of the present invention think that a portion of added Ca is dissolved in cordierite, and the remainder is in the grain boundary of cordierite.

A composite oxide including Ca, Al and Si not existing substantially refers to a case where their peaks measured with an X-ray diffraction device using a Kα-ray of Cu overlap with peaks of cordierite or alumina and their discrete peaks are not detected so their existence cannot be verified.

A method for producing a cordierite-based sintered body of the present invention is described as follows.

First, material powders, for example, a MgCO₃ powder, an Al₂O₃ powder, a SiO₂ powder and a CaCO₃ powder, are weighed in a prescribed ratio, and are wet mixed. The mixture is dried and then calcined at 1100 to 1300°C in the air, followed by pulverization. An adequate amount of binder is added to the obtained powder and the resulting substance is molded into a compact. A cordierite-based sintered body is obtained by sintering the compact at 1200 to 1450°C in the atomospher. Any of the material powders containing metal elements of Mg, Al, Si and Ca may be used as long as it can be molded as an oxide by sintering an oxide, carbonate, acetate or others.

The powder may also be prepared by mixing a CaCO₃ powder and an Al₂O₃ powder with a mixture powder of a MgCO₃ powder, an Al₂O₃ powder and a SiO₂ powder mixed in a prescribed ratio in advance so that cordierite may be formed. The powder may also be prepared by mixing a CaCO₃ powder and an Al₂O₃ powder with a cordierite powder obtained by pulverizing a calcined mixture powder of a MgCO₃ powder, an Al₂O₃ powder and a SiO₂ powder mixed in a prescribed ratio in advance so that cordierite may be formed.

Sintering may be carried out at a specific sintering temperature of 1200 to 1450°C, because the purpose of densifying can be sufficiently achieved by including the Ca component. By following this method, a cordierite-based sintered body of the present invention can be produced. Moreover, in order to further densify the sintered body, hot isostatic pressing may be applied under a pressure of 100 to 200 MPa and at 1000 to 1350°C.

In order to avoid the substantive inclusion of composite oxide including Ca, Al and Si in the cordierite-based sintered body, preferably the amount of Ca is 0.8% or less by mass in terms of CaO and the sintering temperature is 1400°C or less.

In order to fulfill (I_{Al}/Iₘₐₛ) of 0.02 to 0.15 without dissolving much Al from the added Al₂O₃ in cordierite, preferably an alumina powder is added to a cordierite powder, the material particle size of the alumina powder is 0.1 to 10 µm, more preferably 0.2 to 3 µm, and the sintering temperature is 1400°C or less.

A cordierite-based sintered body of the present invention as composed above contains cordierite having a negative thermal expansion coefficient and alumina having a positive thermal expansion coefficient in quantities fulfilling the peak intensity ratio (I_{Al}/Iₘₐₛ) of 0.02 to 0.15. Besides, the cordierite-based sintered body does not have a glass phase. Thus, increase in thermal expansion coefficient caused by the presence of a glass phase can be suppressed. Therefore, the thermal expansion coefficient at near room temperature can be controlled to close to around zero.

Moreover, a cordierite-based sintered body of the present invention contains alumina in an amount fulfilling the peak intensity ratio (I_{Al}/Iₘₐₛ) of 0.02 to 0.15. Besides, lightweight Ca is included in an amount of 0.2 to 0.8% by mass of the total mass measured in terms of CaO. Thus, the sinterability can be improved and the Young's modulus can be improved, the stiffness of a cordierite-based sintered body can be improved and the specific stiffness can be enhanced. When a cordierite-based sintered body of the present invention is applied, for example, in a stage of a lithography machine, vibration of the stage after coming to a halt at a predetermined position can be suppressed and the lithographic exposure precision of the lithography machine can be improved.

A cordierite-based sintered body of the present invention is capable of having the following features: a porosity of 0.25% or less, a Young's modulus of 140 GPa or more, a specific stiffness of 56 or more, an absolute value of thermal expansion coefficient at room temperature of 0.1 × 10⁻⁶/°C or less and a specific gravity of less than 2.6.

A member for a lithography machine is preferably made of the aforementioned cordierite-based sintered body. Because the specific stiffness of a cordierite-based sintered body is high, using such a member for a lithography machine
will exhibit an excellent feature in controlling vibration of a stage caused by high speed movement and halt and will improve lithography exposure precision and throughput, so that it may be preferably used in a stage of a lithography machine in which a support carrying a Si wafer moves with high speed to a position where lithography exposure treatment is conducted.

### Examples

To a cordierite powder having an average particle size of 3 µm was added a CaCO₃ powder in a ratio shown in Table 1 in terms of CaO, and further was added an Al₂O₃ powder having an average particle size of 0.5 µm in a ratio shown in Table 1. The mixture was mixed with a ball mill for 24 hours, and then was molded under a pressure of 1 t/cm². After sintering in air at 1300 to 1400°C, various ceramics were produced. Then, hot isostatic pressing was conducted at 1000 to 1350°C and under a pressure of 150 MPa.

The obtained ceramics were polished and ground to a size of 3 × 4 × 15 mm. The thermal expansion coefficients of the ceramics at room temperature were measured by laser interferometry (JISR 3251-1995). The Young's moduli of the ceramics at room temperature were measured by the ultrasonic pulse method (JIS R1602-1995). The results are shown in Table 1. Furthermore, the Ca amounts in the ceramics were found with an EPMA (Wavelength-dispersive X-ray Micro Analyzer) and the figures are shown in Table 1 in terms of CaO.

The ratios (I_{Al}/Iₘₐₛ) of the peak intensity I_{Al} of the main peak of alumina (2θ = 35.0 - 35.5°) to the peak intensity Iₘₐₛ of the main peak of cordierite (2θ = 28.0 - 29.0°) were found with an X-ray diffraction device using a Kα-ray of Cu, and the results are shown in Table 1. Then, by checking that no broad peaks (halo patterns) were detected in the low angle side, the presence or absence of a glass phase was verified, and the results are shown in Table 1. The presence or absence of a composite oxide (Ca compound) including Ca, Al and Si was verified by checking the absence of a peak measured with an X-ray diffraction device other than the peaks exhibiting the presence of cordierite and alumina. In the case where there is no peak other than those exhibiting the presence of cordierite and alumina, "Absence" is entered in the "Ca Compound" column in Table 1. The specific gravities were found by the Archimedes method and the results are shown in Table 1 along with the specific stiffnesses derived from the specific gravities.

**[Table 1]**

| Sample | Materials (mass%) | | | I_{Al}/I_{MAS} | Amount of Ca | Ca Compound | Glass Phase | Specific Gravity | Young's Modulus | Specific Stiffuess (Young's Modulus/ Specific Gravity) | Thermal Expansion Coefficient |
|---|---|---|---|---|---|---|---|---|---|---|---|
| No. | Cordierite | CaCO₃ in terms of CaO | Al₂O₃ | | in terms of CaO (mass%) | | | (g/cm³) | (GPa) | | (× 10⁻⁶/°C) |
| 1 | 97.5 | 0.5 | 2 | 0.02 | 0.5 | Absense | Absense | 2.52 | 142 | 56.35 | -0.05 |
| 2 | 95 | 0.5 | 4.5 | 0.07 | 0.5 | Absense | Absense | 2.53 | 145 | 57.09 | -0.01 |
| 3 | 95 | 0.2 | 4.8 | 0.08 | 0.2 | Absense | Absense | 2.53 | 148 | 58.27 | 0.02 |
| 4 | 95 | 0.8 | 4.2 | 0.065 | 0.8 | Absense | Absense | 2.55 | 141 | 55.08 | -0.02 |
| 5 | 94.6 | 0.4 | 5 | 0.085 | 0.4 | Absense | Absense | 2.53 | 148 | 58.27 | -0.01 |
| 6 | 92.6 | 0.4 | 7 | 0.15 | 0.4 | Absense | Absense | 2.56 | 153 | 59.53 | 0.08 |
| *7 | 98.5 | 0.5 | 1 | 0.005 | 0.5 | Absense | Absense | 2.52 | 139 | 55.16 | -0.10 |
| *8 | 95 | 0.15 | 4.85 | 0.09 | 0.15 | Absense | Absense | 2.50 | 125 | 50 | -0.01 |
| *9 | 95 | 0.9 | 4.1 | 0.06 | 0.9 | Presence | Absense | 2.56 | 141 | 55.08 | 0.19 |
| *10 | 90.6 | 0.4 | 9 | 0.17 | 0.4 | Absense | Absense | 2.60 | 154 | 59.23 | 0.2 |

| | | | | | | | | | | | |
|---|---|---|---|---|---|---|---|---|---|---|---|
| Samples with "*" mean those of Comparative Examples. | | | | | | | | | | | |

From Table 1, it can be found that by including Ca in cordierite in an amount of 0.2 to 0.8% by mass in terms of CaO, and by adding Al₂O₃ so that the peak intensity ratio (I_{Al}/Iₘₐₛ) falls within the range of 0.02 to 0.15, the absolute value of the thermal expansion coefficient of 0.1 × 10⁻⁶/°C or less, the Young's modulus of 140 GPa or more and the specific gravity of less than 2.6 can be achieved.

Meanwhile, Sample No. 7 having the peak intensity ratio (I_{Al}/Iₘₐₛ) of 0.005 shows the Young's modulus of 139 GPa and the thermal expansion coefficient of -0.1 × 10⁻⁶/°C.

Sample No. 8 having a Ca content of less than 0.2% by weight did not sufficiently densify, so the Young' s modulus was as low as 125 GPa.

Sample No. 9 having a Ca content of more than 0. 8% by weight formed a large quantity of Al₂Si₂O₈ crystals in the grain boundary, so it can be seen that the thermal expansion coefficient was as high as 0.19 × 10⁻⁶/°C.

Sample No. 10 having a peak intensity ratio (I_{Al}/Iₘₐₛ) of 0.17 can be seen to have a thermal expansion coefficient of as high as 0.2 × 10⁻⁶/°C.

## Claims

1. A cordierite-based sintered body comprising cordierite as a primary crystal and alumina as a secondary crystal,
wherein the cordierite-based sintered body has a porosity of 0.25% or less and has a thermal expansion coefficient at room temperature of -0.1×10⁻⁶/°C or more and 0.1×10⁻⁶/°C or less,
wherein Ca is contained at an amount of 0.2 to 0.8% by mass of the total mass in terms of CaO,
the ratio (I_{Al}/Iₘₐₛ) of the peak intensity I_{Al} of the main peak of alumina (2θ = 35.0 - 35.5°) to the peak intensity Iₘₐₛ of the main peak of cordierite (2θ = 28.0 - 29.0°) each measured with an X-ray diffraction device using a Kα-ray of Cu falls within the range of 0.02 to 0.15, and
a glass phase is not contained.

2. The cordierite-based sintered body according to claim 1, wherein the cordierite-based sintered body is composed of Mg, Al, Si, Ca and O, and includes each of C, Ti, Zr, Li and Na as impurities in an amount of 0.2% by mass or less of the total mass measured in terms of an oxide.

## Patentansprüche

1. Ein Cordierit-basierter Sinterkörper, der Cordierit als einen Primärkristall und Aluminiumoxid als einen Sekundärkristall aufweist,
wobei der Cordierit-basierte Sinterkörper eine Porosität von 0,25% oder weniger hat und einen Wärmedehnungskoeffizienten bei Raumtemperatur von -0,1 x 10⁻⁶/°C oder mehr und 0,1 x 10⁻⁶/°C oder weniger hat,
wobei Ca in einer Menge von 0,2 bis 0,8 Masse-% der Gesamtmasse in Form von CaO enthalten ist,
das Verhältnis (I_{Al}/Iₘₐₛ) der Peakintensität I_{Al} des Hauptpeaks von Aluminiumoxid (2θ = 35,0 - 35,5°) zu der Peakintensität Iₘₐₛ des Hauptpeaks von Cordierit (2θ = 28,0 - 29,0°), jeweils gemessen mit einer Röntgenbeugungsvorrichtung, die einen Cu-Kα-Strahl verwendet, in den Bereich von 0,02 bis 0,15 fällt, und
keine Glasphase enthalten ist.

2. Der Cordierit-basierte Sinterkörper gemäß Anspruch 1, wobei der Cordierit-basierte Sinterkörper aus Mg, Al, Si, Ca und 0 zusammengesetzt ist und jedes von C, Ti, Zr, Li und Na als Verunreinigungen in einer Menge von 0,2 Masse-% oder weniger der Gesamtmasse enthält, gemessen in Form von Oxid.

## Revendications

1. Un corps fritté à base de cordiérite, comportant de la cordiérite comme cristal primaire et de l'alumine comme cristal secondaire,
dans lequel le corps fritté à base de cordiérite a une porosité de 0,25% ou moins et a un coefficient de dilatation thermique à température ambiante de -0,1 x 10⁻⁶/°C ou plus et de 0,1 x 10⁻⁶/°C ou moins,
dans lequel du Ca est contenu d'un montant de 0,2 à 0,8 % en masse de la masse totale en termes de CaO,
le rapport (I_{Al}/Iₘₐₛ) de l'intensité de pic I_{Al} du pic principal d'alumine (2θ = 35,0 - 35,5°) à l'intensité de pic Iₘₐₛ du pic principal de cordiérite (2θ = 28, 0 - 29,0°), chacune mesurée avec un dispositif de diffraction par rayons X moyennant un rayon Kα de Cu tombe dans une plage de 0,02 à 0,15, et
aucune phase vitreuse n'est contenue.

2. Le corps fritté à base de cordiérite selon la revendication 1, dans lequel le corps fritté à base de cordiérite est composé de Mg, Al, Si, Ca et 0, et comprend chacun de C, Ti, Zr, Li et Na comme impuretés d'un montant de 0,2 % en masse ou moins de la masse totale, mesurés en termes d'oxydes.
